# EUROPÄISCHE PATENTSCHRIFT

(11) **EP 1 681 270 B1**
(45) Veröffentlichungstag und Bekanntmachung des Hinweises auf die Patenterteilung: **06.07.2011**
(21) Anmeldenummer: 06450002.8
(22) Anmeldetag: 05.01.2006
(51) Int. Cl.: C01G 1/12, C01G 29/00, C01G 19/00, C01G 1/00

(54) **Verfahren zur Herstellung von weitgehend eisenfreien Metallchalkogeniden oder -arseniden mit einer Korngrössenverteilung im Nanobereich**
Method of preparing iron free metal chalgogenides and arsenides with a nanoscale particle size distribution
Procédé de préparation de chalcogenides et d'arsenides de métaux exempt de fer et ayant une distribution de la taille des particules a l'echelle nanométrique

(30) Priorität: 13.01.2005 AT 462005
(43) Veröffentlichungstag der Anmeldung: 19.07.2006
(73) Patentinhaber: Rimmer, Karl, 9231 Köstenberg (AT)
(72) Erfinder: Rimmer, Karl, 9231 Köstenberg (AT)
(74) Vertreter: Dungler, Karin

(56) Entgegenhaltungen:
- AKITOSHI HAYASHI, TAKAMASA OHTOMO, FUMINORI MIZUNO, KIYOHARU TADANAGA, MASAHIRO TATSUMISAGO: "Rechargeable lithium batteries, using sulfur-based cathode materials and Li2S?P2S5 glass-ceramic electrolytes" ELECTROCHIMICA ACTA, Bd. 50, Nr. 2-3, 2004, Seiten 893-897, XP002477674
- PAOLO MATTEAZZI, GIOVANNI FARNÈ: "Synthesis of nanocrystalline gallium and aluminum arsenides by room temperature grinding of elemental powders" MATERIALS RESEARCH BULLETIN, Bd. 26, Nr. 12, 1991, XP002477675
- K. SRIDHAR, K. CHATTOPADHYAY: "Synthesis by mechanical alloying and thermoelectric properties of Cu 2Te" JOURNAL OF ALLOYS AND COMPOUNDS, Bd. 264, Nr. 1-2, 1998, Seite 293-298, XP002477676
- V. RUSANOV, CHR. CHAKUROV: "On the development mechanism and kinetics of the explosive mechanochemical synthesis" JOURNAL OF SOLID STATE CHEMISTRY, Bd. 79, Nr. 2, 1989, Seiten 181-188, XP002477677
- V. A. CHERNENKO, L. WEE, P. G. MCCORMICK, AND R. STREET: "Giant magnetoelastic response in MnAs" JOURNAL OF APPLIED PHYSICS, Bd. 85, Nr. 11, 1999, XP002477678
- T. KOSMAC AND T. H. COURTNEY: "Milling and mechanical alloying of inorganic nonmetallics" JOURNAL OF MATERIALS RESEARCH, Bd. 7, Nr. 6, 1992, Seiten 1519-1525, XP002477679

## Beschreibung

Die Erfindung betrifft ein Verfahren zur Herstellung von weitgehend eisenfreien Metallchalkogeniden oder -arseniden mit einer Korngrößenverteilung im Nanobereich, wobei eisenfreies Metallpulver aus Elementen ausgewählt aus der Gruppe Wismut, Zinn, Kupfer, Indium, Gallium, Zink, Aluminium, Titan, Molybdän und Wolfram, mit Reaktanden, ausgewählt aus der Gruppe Schwefel, Selen, Tellur und Arsen, in einer Reaktionsmühle in inerter Atmosphäre vermahlen wird. Der Begriff "weitgehend eisenfrei" wird, im Sinne der Erfindung deswegen verwendet, da im industriellen Fertigungsprozess und den verwendeten Materialien Verunreinigungen mit Eisen nie ganz ausgeschlossen werden können.
Beispielhaft wird ein Eisengehalt von höchstens 50 ppm angegeben.

Die Elemente Schwefel, Selen und Tellur bilden neben Sauerstoff die 6. Hauptgruppe des Periodensystems und werden als Chalkogene (Erzbildner) bezeichnet. Ihre Verbindungen mit Metallen bilden in der Erdkruste natürlich vorkommende Erzmineralien. Für technische Anwendungen, wie Schmier- und Reibwerkstoffe, Elektrodenmaterialien für wiederaufladbare Hochleistungsbatterien und Halbleitermaterialien, werden kristalline Metallchalkogenide und -arsenide benötigt, die eine definierte chemische Zusammensetzung aufweisen, welche bei natürlich vorkommenden Erzmineralien üblicherweise nicht vorliegt. Die für technische Anwendungen benötigten Metallchalkogenide und -arsenide werden daher synthetisch aus definierten Ausgangsmaterialien hergestellt.

So können Metallchalkogenide aus Metallsalz- und Alkalichalkogenid-Salzlösungen ausgefällt werden, wobei jedoch amorphe Produkte erhalten werden, die durch Wärmebehandlung in eine kristalline Form übergeführt werden müssen. Diese Methode ist aufwendig, da teure Metallsalze als Ausgangsprodukte eingesetzt werden. Weiters müssen die anfallenden Verunreinigungen abgetrennt und entsorgt werden.

Weiters ist es bekannt, Metallchalkogenide durch Mahlen von Reaktionsmischungen herzustellen, wobei als Mahlkörper Stahlkugeln verwendet werden. Bei Verwendung von Stahlkugeln gehen jedoch erhebliche Mengen an Eisen unter Bildung von FeS oder Komplexsulfiden unter Verzehr der Mahlkörper ins Mahlgut über. Beim Mahlen von thermisch umgesetzten Reaktionsprodukten mit Stahlkugeln geht ebenfalls Eisen ins Mahlgut über.

Es wird daher in der DE 198 15 992 A1 ein Verfahren vorgeschlagen, bei dem ein Festschmierstoff auf Zinnsulfidbasis durch Erhitzen einer Zinnpulver-Schwefelmischung im Muffelofen auf 200-1500°C durch thermische Umsetzung hergestellt werden kann. Da Schwefel einen Schmelzpunkt von 119,7°C und Zinn einen Schmelzpunkt von 232°C besitzt, liegt bei einer Reaktionstemperatur von nur 200°C der gesamte Schwefel flüssig vor. Weiters verläuft die Reaktion exotherm, sodass bei weiterem Temperaturanstieg der eingesetzte Schwefel zu sieden beginnt und dadurch giftige Schwefeldämpfe entstehen. Diese Schwefeldämpfe enthalten auch hochgiftiges Schwefeldioxid, welches ebenso umweltbelastend ist und daher durch geeignete Verfahrenstechniken gebunden werden muss. Nach Ende der Reaktion muss die zunächst flüssige Masse abgekühlt werden und das erhaltene kristalline Reaktionsprodukt auf die gewünschte Korngröße gemahlen werden. Es sind daher bei dem Verfahren gemäß DE 198 51 992 A1 mehrere Zeit- und arbeitsintensive Prozessstufen bis zum Erhalt des Endproduktes notwendig. Weiters kann beim Mahlen des noch freien Schwefel enthaltenden Endproduktes in konventionellen Mahlaggregaten durch Eisenaufnahme teilweise die Bildung von Eisensulfid erfolgen.

Man ist daher bei der Herstellung von weitgehend eisenfreien Metallchalkogeniden oder -arseniden dazu übergegangen, die Materialien des Mahlkörpers bzw. der Mühle entsprechend abzuwandeln, um eine Verfahrensverbesserung zu erzielen. So beschreibt die Lehre gemäß A. Hayashi et al. in Eletrochimica Acta 2004, 50, 893-897 die Herstellung von Kupfersulfiden mittels eines mechanochemischen Verfahrens, in dem hochreine Schwefel- und Kupferpulver in einer Mühle bestehend aus einem Aluminiumoxidbehälter und Aluminiumoxidkugeln in einer Argon-Atmosphäre gemahlen werden. Gemäß der Lehre von V.A. Chernenko, L. Wee, P.G. McCormick, R. Street, J. Appl. Phys. 1999, 85(11), 7833-7837 wird ebenso in einer Argon-Atmosphäre ein mechanochemisches Verfahren zur Synthese von Manganarsenid in einer Mühle bestehend aus einem Kunststoffgehäuse und unter Verwendung von Zirkonoxidkugeln vorgeschlagen. Die bekannten Verfahren sind allerdings für den großtechnischen Bereich kaum nachzustellen, was durch das Erzeugen der Argon-Atmosphäre verursacht wird. Somit wird von V. Rusanov, C. Chakurov, J.Solid State Chem. 1989, 79, 181-188 das Arbeiten in einer Atmosphäre bestehend aus Luft in Gegenwart von Kieselsäure vorgeschlagen, wobei das Mühlenmaterial sowie das Mahlwerk aus Achat besteht. Auch hier ist mit Verunreinigungen im Endprodukt, bedingt durch die verwendete Luftatmosphäre zu rechnen. Man ist daher dazu übergegangen anstelle von Achat, Hartmetalle für das Mahlwerk sowie die Mühlenauskleidung zu verwenden. So schlagen P. Matteazzi, G. Farnè, in Mat. Res.Bull., 1991, 26, 1283-1290 die Verwendung von Vibrationskugelmühlen mit Wolframcarbidgehäuse und Wolframcarbidkugeln vor. Allerdings wird auch hier unter Stickstoff-Atmosphäre gearbeitet, was im großtechnischen Maßstab oftmals zu Problemen führt. Daher schlagen K. Sridhar, K. Chattopadhyay, in J. Alloys and Comp. 1998, 264, 293-298 zwar auch ein Mühlengehäuse aus Wolframcarbid unter Verwendung von Wolframcarbidkugeln vor; allerdings wird hier als Mahlhilfsmittel Toluol hinzugegeben. Die Reaktionsführung mit einer Dauer von 128 Stunden ist allerdings ebensowenig für die Anwendung im großtechnischen Maßstab geeignet. T. Kosmac, T.H. Courtney beschäftigen sich daher in J. Mater. Res. 1992, 7(6), 1519-1525 mit der mechanochemischen Herstellung von Nickel-, Zink- und Wolframsulfiden in inerter oder sauerstoffhältiger Atmosphäre. Das Mahlwerk aus Edelstahl zeigt bei der Synthese von Nickel- bzw. Zinksulfid nur einen geringen Abrieb, allerdings wurde festgestellt, dass die Synthese von Wolframsulfid auf mechanochemischem Weg nicht gelingt.

Aufgabe der vorliegenden Erfindung ist es daher, ein industriell anwendbares und gleichzeitig umweltfreundliches Verfahren bereitzustellen, bei welchem Metallchalkogenide oder -arsenide aus den Elementen Wismut, Zinn, Kupfer, Indium, Gallium, Zink, Aluminium, Titan, Molybdän und Wolfram und den Chalkogenelementen Schwefel, Selen, Tellur oder dem Element Arsen, in weitgehend eisenfreier Form mit Korngrößen im Nanobereich erhalten werden.

Erfindungsgemäß wird ein Verfahren der eingangs genannten Art vorgeschlagen, welches dadurch gekennzeichnet ist, dass die Mühlenauskleidung und die Mahlkörper aus einer eisenfreien Pseudolegierung aus Wolframcarbid mit metallischer-Matrix aus Kobalt bestehen.

Vorteilhafte Ausgestaltungen des erfindungsgemäßen Verfahrens werden gemäß Unteransprüche offenbart.

Die Erfindung wird im folgenden anhand von möglichen Ausführungsbeispielen näher erläutert.

### Beispiel 1: Herstellung von Wismutsulfid (Bi₂S₃)

In einer Exzenter-Schwingmühle werden 66 kg einer Mischung aus 53,6 kg Wismutpulver mit einer mittleren Korngröße von d₅₀ = 15 µm und 12,4 kg Schwefelpulver 120 Minuten unter Verwendung von 3720 kg Hartmetallkugeln mit einem Durchmesser von 35 mm gemahlen. Die Drehzahl der Schwingmühle beträgt 960 min⁻¹, der Schwingkreisdurchmesser 20 mm. Der Mahlkörperfüllungsgrad beträgt 80 %. Es wird ein kristallines Reaktionsprodukt erhalten, das eine mittlere Agglomeratkorngröße von 16,4 µm aufweist. Die Größe der Einzelkristalle liegt im Nanometerbereich.

### Beispiel 2: Herstellung von Zinn(II)sulfid (SnS)

In einer Exzenter-Schwingmühle werden 14,592 kg Reaktionsmischung, bestehend aus 11,52 kg luftverdüstem Zinnpulver mit einer mittleren Korngröße von d₅₀ = 40 µm und 3,072 kg Schwefelpulver 60 Minuten unter Verwendung von 930 kg Hartmetallkugeln mit einem Durchmesser von 15 mm gemahlen. Es wird ein kristallines Reaktionsprodukt erhalten, das eine mittlere Agglomeratkorngröße von 18,7 µm aufweist. Während der Mahlung werden in Abständen von 15 Minuten Proben entnommen und mittels Röntgendiffraktometrie untersucht. Mit zunehmender Mahldauer erhöht sich der Anteil an SnS, bis das metallische Zinn und der Schwefel nahezu vollständig reagiert haben. Der Eisengehalt des Produktes liegt bei unter 50 ppm.

### Beispiel 3: Herstellung von Zinn(IV)sulfid(SnS₂)

In einer Labor-Exzenter-Schwingmühle werden 552 g Reaktionsmischung, bestehend aus 360 g luftverdüstem Zinnpulver mit einer mittleren Korngröße von d₅₀ = 10 µm und aus 192 g Schwefelpulver 30 Minuten unter Verwendung von 36 kg Hartmetallkugeln mit einem Durchmesser von 15 mm gemahlen. Es wird ein kristallines Reaktionsprodukt aus Zinnsulfid SnS₂ erhalten, das eine mittlere Korngröße von 12,1 µm aufweist.
Bei den angeführten Ausführungsbeispielen werden die Metallchalkogenide oder -arsenide durch mechanochemische Reaktion der festen Reaktionskomponenten bei Temperaturen von etwa 100°C in nur einem einzigen Prozessschritt erhalten. Hierzu wird eine Mischung der Reaktanden, nämlich Metallpulver, ausgewählt aus der Gruppe Wismut, Zinn, Kupfer, Indium, Gallium, Zink, Aluminium, Titan, Molybdän und Wolfram und Chalkogenelement aus der Gruppe Schwefel, Selen, Tellur oder Arsenpulver im vorher errechneten stöchiometrischen Verhältnis unter Schutzgas (Stickstoff oder Argon) in einem geeigneten Mahlaggregat, beispielsweise einer Exzenter-Schwingmühle gemahlen. Die Temperatur steigt beim Mahlen durch die eingebrachte mechanische Energie und durch die freiwerdende Reaktionswärme an, jedoch wird die Schmelztemperatur nicht erreicht, so dass keine flüssige Phase gebildet wird. Beim Mahlprozess wirken die Mahlkörper aufgrund ihrer hohen Wärmekapazität als wärmeaufnehmende Puffer, wobei jeodch im Dauerbetrieb eine entsprechende Kühlung des Mahlaggregates erforderlich ist.

Weiters kann zur Erreichung eines bestimmten Umsetzungsgrades die übliche Mahldauer durch den Einsatz besonders feinkörniger Ausgangspulver verringert werden.

Ebenso können der Reaktionsmischung Dispersphasen, wie Graphit oder Metalloxid beigemengt werden, die beim Mahlprozess in die entstehenden Kristallstrukturen innig eingemahlen werden.

Durch den erfindungsgemäßen Einsatz von eisenfreien Hartmetallen, nämlich einer eisenfreien Pseudolegierung aus Wolframcarbid mit einer metallischen Bindematrix aus Cobalt, die nicht mit dem freien Schwefel der Reaktionsmischung oder den bereits gebildeten Sulfiden reagiert, gelingt es, den Mahlprozess ohne die Aufnahme von Eisen und den damit einhergehenden Verschleiß von Mühlenpanzerung und Mahlkörpern durchzuführen. Die Synthese hochreiner Matallchalkogenide oder -arsenide der eingangs genannten Art für elektrochemische oder photovoltaische Anwendungen ist so unter Einsatz reiner Ausgangsmaterialien möglich. Auch konnten keine signifikanten Oxidgehalte sowie umweltschädliche, gasförmige Emissionen festgestellt werden.

## Patentansprüche

1. Verfahren zur Herstellung von weitgehend eisenfreien Metallchalkogeniden oder -arseniden mit einer Korngrößenverteilung im Nanobereich, wobei eisenfreies Metallpulver aus Elementen ausgewählt aus der Gruppe Wismut, Zinn, Kupfer, Indium, Gallium, Zink, Aluminium, Titan, Molybdän und Wolfram, mit Reaktanden, ausgewählt aus der Gruppe Schwefel, Selen, Tellur und Arsen, in einer Reaktionsmühle in inerter Atmosphäre vermahlen wird, **dadurch gekennzeichnet, dass** die Mühlenauskleidung und die Mahlkörper aus einer eisenfreien Pseudolegierung aus Wolframcarbid mit metallischer Bindematrix aus Cobalt bestehen.

2. Verfahren nach Anspruch 1, **dadurch gekennzeichnet, dass** die Reaktionsmühle eine mehrmodulige Exzenter-Schwingmühle ist.

3. Verfahren nach Anspruch 1 oder 2, **dadurch gekennzeichnet, dass** Metallpulver und Reaktanden in stöchiometrischen Verhältnissen mit Bezug auf die herzustellenden Metallchalkogenide oder -arsenide eingesetzt werden.

4. Verfahren nach einem der Ansprüche 1 bis 3, **dadurch gekennzeichnet, dass** die Kontrolle des Mahlfortschritts durch Röntgenbeugungsanalyse erfolgt.

5. Verfahren nach einem der Ansprüche 1 bis 4, **dadurch gekennzeichnet, dass** die Reaktionsmahlung im Batch-Betrieb erfolgt.

6. Verfahren nach einem der Ansprüche 1 bis 5, **dadurch gekennzeichnet, dass** das Metallpulver als eisenfreie Metalllegierung eingesetzt wird.

7. Verfahren nach einem der Ansprüche 1 bis 6, **dadurch gekennzeichnet, dass** als Metallpulver Mischungen aus zwei oder mehreren Reinmetallen ausgenommen Eisen eingesetzt werden.

8. Verfahren nach einem der Ansprüche 1 bis 7, **dadurch gekennzeichnet, dass** der Reaktionsmischung weitere pulverförmige Zusatzstoffe wie Graphit, Carbide, Nitride, Oxide oder Silikate, zugesetzt werden, die an der Reaktion selbst nicht teilnehmen, aber nach der Mahlung innig vermischt mit dem Reaktionsprodukt vorliegen.

9. Verfahren nach einem der Ansprüche 1 bis 8, **dadurch gekennzeichnet, dass** der Reaktionsmischung zur Vermeidung der Agglomeratbildung Paraffine zugesetzt werden.

10. Verfahren nach einem der Ansprüche 1 bis 9, **dadurch gekennzeichnet, dass** die hergestellten Metallchalkogenide oder -arsenide eisenfrei sind.

## Claims

1. A method of producing largely non-ferrous metal chalcogenides or arsenides with a grain size distribution in the nano range, wherein non-ferrous metal powder made from elements chosen from the group comprising bismuth, tin, copper, indium, gallium, zinc, aluminium, titanium, molybdenum and tungsten is ground with reactants chosen from the group comprising sulphur, selenium, tellurium and arsenic in an inert atmosphere in a reaction mill, **characterised in that** the mill lining and the grinding bodies are made from a non-ferrous pseudo-alloy of tungsten carbide with a metallic binding matrix of cobalt.

2. The method according to claim 1, **characterised in that** the reaction mill is a multi-module eccentric vibration mill.

3. The method according to claim 1 or 2, **characterised in that** metal powder and reactants are used in stoichiometric proportions in relation to the metal chalcogenides or arsenides being produced.

4. The method according to one of the claims 1 to 3, **characterised in that** the grinding progress made is checked by X-ray diffraction analysis.

5. The method according to one of the claims 1 to 4, **characterised in that** the reaction grinding takes place in batch operation.

6. The method according to one of the claims 1 to 5, **characterised in that** the metal powder is used as a non-ferrous metal alloy.

7. The method according to one of the claims 1 to 6, **characterised in that** mixtures of two or more pure metals, excluding iron, are used as the metal powder.

8. The method according to one of the claims 1 to 7, **characterised in that** further powder additives, such as graphite, carbide, nitride, oxide or silicate, are added to the reaction mixture, which are not involved in the reaction itself, but are closely blended with the reaction product after grinding.

9. The method according to one of the claims 1 to 8, **characterised in that** paraffin is added to the reaction mixture to prevent agglomerate formation.

10. The method according to one of the claims 1 to 9, **characterised in that** the metal chalcogenides or arsenides produced are non-ferrous.

## Revendications

1. Procédé de fabrication de chalcogénures ou d'arséniures métalliques amplement exempts de fer avec une répartition granulométrique de l'ordre des nanomètres, de la poudre métallique exempte de fer d'éléments choisis dans le groupe bismuth, étain, cuivre, indium, gallium, zinc, aluminium, titane, molybdène et tungstène étant pulvérisée avec des agents réactifs choisis dans le groupe soufre, sélénium, tellure et arsenic dans un broyeur de réaction sous atmosphère inerte, **caractérisé en ce que** l'habillage du broyeur et les organes broyeurs consistent dans un pseudo-alliage exempt de fer de carbure de tungstène avec une matrice de liaison métallique en cobalt.

2. Procédé selon la revendication 1, **caractérisé en ce que** le broyeur de réaction est un broyeur vibrant multimodulaire excentrique.

3. Procédé selon la revendication 1 ou 2, **caractérisé en ce qu'**on met en oeuvre de la poudre métallique et des agents réactifs dans des conditions stoechiométriques en rapport avec les chalcogénures ou arsénures métalliques à fabriquer.

4. Procédé selon l'une quelconque des revendications 1 à 3, **caractérisé en ce que** le contrôle de l'avancement du broyage s'effectue par analyse de diffraction radiographique.

5. Procédé selon l'une quelconque des revendications 1 à 4, **caractérisé en ce que** le broyage à réaction s'effectue en traitement par lots.

6. Procédé selon l'une quelconque des revendications 1 à 5, **caractérisé en ce qu'**on met en oeuvre la poudre métallique sous la forme d'un alliage métallique exempt de fer.

7. Procédé selon l'une quelconque des revendications 1 à 6, **caractérisé en ce qu'**ont met en oeuvre en tant que poudre métallique des mélanges de deux ou de plusieurs métaux purs, à l'exception du fer.

8. Procédé selon l'une quelconque des revendications 1 à 7, **caractérisé en ce qu'**on ajoute au mélange réactif des adjuvants supplémentaires, comme le graphite, des carbures, des nitrures, des oxydes ou des silicates, qui ne prennent pas eux mêmes part à la réaction, mais qui après l'opération de broyage, se présentent en mélange intime avec le produit de réaction.

9. Procédé selon l'une quelconque des revendications 1 à 8, **caractérisé en ce que** pour éviter une agglomération, on ajoute au mélange réactif des paraffines.

10. Procédé selon l'une quelconque des revendications 1 à 9, **caractérisé en ce que** les chalcogénures ou arséniures métalliques sont exempts de fer.
